# EUROPEAN PATENT SPECIFICATION

(11) **EP 3 670 144 B1**
(45) Date of publication and mention of the grant of the patent: **20.10.2021**
(21) Application number: 18460083.1
(22) Date of filing: 21.12.2018
(51) Int. Cl.: B29C 49/58, B29C 49/12, B29L 31/00, B29K 67/00

(54) **A UNIT FOR BLOW-MOULDING OF BOTTLES INTENDED FOR HOT FILLING FROM PET PREFORMS**
EINHEIT ZUM BLASFORMEN VON FLASCHEN, DIE ZUR HEISSFÜLLUNG VON PET-VORFORMLINGEN BESTIMMT SIND
UNITÉ DE MOULAGE PAR SOUFFLAGE DE BOUTEILLES DESTINÉE AU REMPLISSAGE À CHAUD À PARTIR DE PRÉFORMES EN PET

(43) Date of publication of application: 24.06.2020
(73) Proprietor: "TES" Spolka z Ograniczona Odpowiedzialnoscia, 80-180 Kowale (PL)
(72) Inventor: Karaszewski, Waldemar, 81-549 Gdynia (PL)
(74) Representative: Pomianek, Grazyna

(56) References cited:
- DE-A1-102016 009 208
- JP-A- H0 272 929
- US-A- 5 730 914
- US-B1- 6 464 486

## Description

The invention concerns a unit for blow-moulding of bottles intended for hot filling (filling with hot fluids) from PET preforms, where 'PET' is the acronym for polyethylene terephthalate (C₁₀H₈O₄)ₙ.

Today, the PET preform half-products are stretched with a rod, following which compressed air is pumped into the preform through the pipe segment positioned immediately over the preform, with the said stretching rod running through the pipe segment, where there is a duct for compressed air formed between the inner cylindrical wall of the pipe segment and the stretching rod.

Compressed air forms the bottle to the shape copying its shape in the blow mould. The blow mould for bottles intended for hot filling is heated up to the temperature of 120-140 °C. High temperature of the blow mould increases the degree of crystallisation of the PET material in the formed bottle. Higher crystallisation improves heat resistance of the PET material. In the subsequent stage the formed PET bottle gets cooled in compressed air pumped in through the openings made in the side wall of the hollow stretching rod, and then discharged through the said duct, formed between the inner cylindrical wall of the pipe segment and the stretching rod. The discharged air flows along the inner surface of the PET bottle and cools it.

When the bottle is formed too fast in its top segment, particularly in the case of an elongated bottle, especially that with a long neck, under the known method described above, the material shifts along the blow mould, which affects the bottle surface visually. In addition, the process of cooling the formed bottle is also too fast, and thus poorly effective.

Document DE10 2016 009208 A1 discloses a moulding and filling station of an installation for producing filled containers from preforms by means of liquid filling material introduced into the preform under pressure, said moulding and filling station comprising a stretch rod and a liquid duct, which can be controlled by means of a filling valve, passes through at least part of the stretch rod and ends in at least one outlet opening in the stretch rod, A gas barrier is provided in the liquid duct between the filling valve and the outlet opening. The stretch rod for a moulding and filling station has a\ filling material duct and at least one outlet opening for discharging filling material, a gas barrier being provided in the filling material duct.

Document US 5 730 914 A discloses a method of making a moulded plastic container. The preform is placed in a split mould whose walls are heated to a temperature between 150 DEG C. and 177 DEG C, A stretch rod is inserted through the top of the preform, and stretches the preform axially until the preform is the length of the final product. The preform is expanded using compressed ambient air, and is moulded against the walls of the mould. The moulded preform is held against the mould for a predetermined time, during which the outer and inner surfaces of the moulded preform are annealed, and the moulded preform transforms into the final product.

The purpose of the described invention is to solve the problems presented above.

The gist of the invention is to form a duct in the form of a nozzle supplying and discharging air in the bottle forming process.

A unit for blow-moulding of bottles intended for hot filling from PET preforms, comprising a hollow stretching rod open at the top end, the rod featuring openings in its side surface, and a pipe segment through which the : said stretching rod runs, so that there is a duct for compressed air formed between the stretching rod and the inner side of the pipe segment, the inner side of the pipe segment features at least one conical surface convergent towards the bottom, according to the invention is characterised in that the inner wall of the pipe segment features at least one conical surface convergent towards the top.

Preferably, the openings in the stretching rod are arranged along its entire length.

Preferably, the section across the bottom part of the pipe segment matches the cross section of the opening of the blown-moulded preform.

Thanks to using conical surfaces on the inner side of the pipe segment wall, the duct discharging/ supplying the air from/to the preform plays the role of a nozzle which allows to direct the compressed air flowing into the preform down the preform, along the stretching rod, to shape the air flow, and to increase the speed of the air flowing from the duct to the preform, in effect of which the moulding of the bottle in its top section is delayed, which eliminates the shifting of the material along the blow mould in the blow moulding process. It also increases the effectiveness of cooling of the formed bottle thanks to increased pressure of the compressed air which fills the bottle by way of its delayed discharge through the duct of the pipe segment.

Further benefits and advantages of the present invention will become apparent after a careful reading of the detailed description with appropriate reference to the accompanying drawings.

In the drawings:

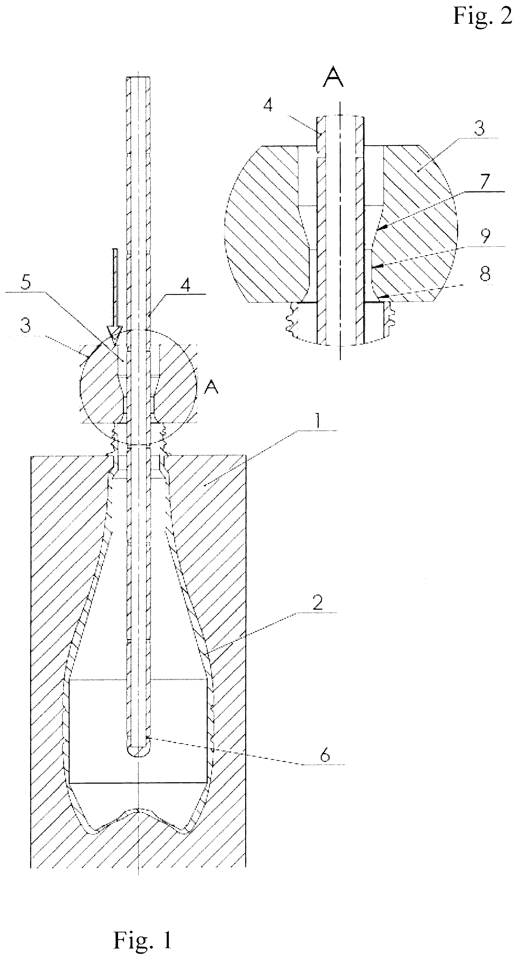

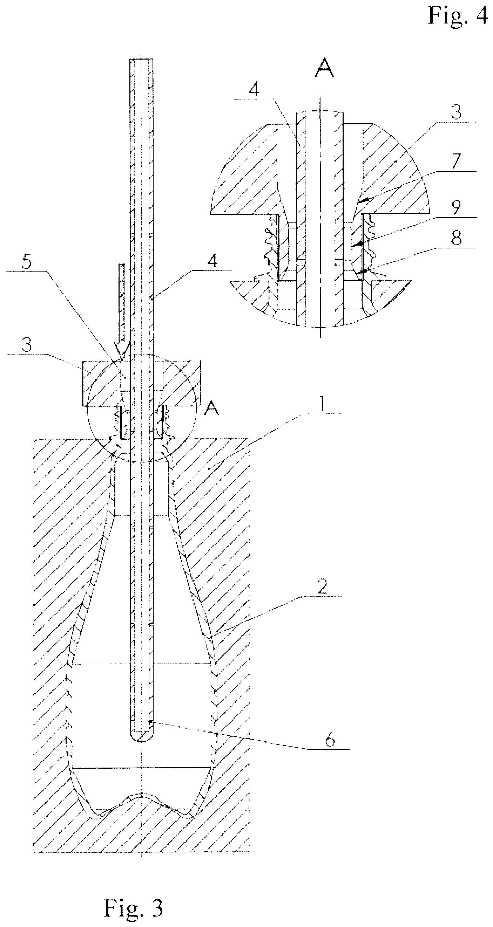

Fig. 1 shows a cross-section of the blow mould with a formed bottle and the bottle blow-moulding unit featuring the pipe segment placed immediately over the preform; Fig. 2 depicts a cross-section of the bottle blow-moulding unit as in Fig. 1; Fig. 3 presents a cross-section of the blow mould with a formed bottle and the bottle blow-moulding unit with the pipe segment partially placed in threaded part of the bottle neck; Fig. 4 shows a cross-section of the bottle blow-moulding unit as in Fig. 3.

In the exemplary embodiment of the invention, a unit for blow moulding of bottles intended for hot filling from PET preforms comprises a hollow stretching rod 4 open at the top end and featuring openings 6 in the side surface, as well as a pipe segment 3 through which the said stretching rod 4 runs, so that there is a duct 5 for compressed air formed between the stretching rod 4 and the inner side of the pipe segment 3. The inner wall of the pipe segment 3 features two conical surfaces 7, 8 of opposite tapering, where there is a cylindrical surface between the conical surfaces, and where the conical surface 7 above the cylindrical surface 9 is convergent towards the bottom, while the conical surface under the cylindrical surface 9 is divergent towards the bottom and is found in the end segment of the duct 5, so that the duct 5 plays the role of a nozzle in the preform blow-moulding process.

In the first embodiment variant shown on Fig. 1 and Fig. 2, the cross-section of the pipe segment 3 is larger than the cross-section of the bottle neck, and the pipe segment 3 is placed immediately over the neck of the preform from which the bottle 2 is formed inside the blow-mould 1 in the blow-moulding process.

In the second embodiment variant shown on Fig. 3 and Fig. 4, the cross section of the pipe segment 3 in its bottom part matches the cross-section of the opening of the preform of which the bottle 2 is formed inside the blow-mould 1 in the blow-moulding process, so that the bottom part of the pipe segment 3 is nested in the preform opening.

In the process of forming the bottle 2 inside the mould 1, compressed air is supplied through the duct 5 of the pipe element 3 to the preform placed in the mould 1, where the air flow is shaped and directed by the duct 5 constituting a nozzle, so that the air is directed from the nozzle down the preform, along the stretching rod 4, under increased pressure and higher speed of flow from the duct 5, in effect of which the forming of the top segment of the bottle is delayed, which in turn eliminates the shifting of the material along the blow mould during the blow-moulding process.

Once the bottle 2 is formed, compressed air is supplied to the inside of the stretching rod 4 from its top end, where the air is discharged through the transverse openings 6 made in the side wall of the rod 4 to the formed bottle 2 so to cool it. Then, the air is discharged from the bottle through the duct 5, where the duct's shape, i.e. that of a nozzle, inhibits, and hence delays the discharge of air from the bottle 2, which increases the pressure of the air filling the bottle 2, in effect of which the cooling of the bottle 2 is more effective.

## Claims

1. A unit for blow-moulding of bottles intended for hot filling from PET preforms, comprising a hollow stretching rod open at the top end, the rod featuring openings in its side surface, and a pipe segment through which the said stretching rod runs, so that there is a duct for compressed air formed between the stretching rod and the inner side of the pipe segment, the inner side of the pipe segment (3) features at least one conical surface (7) convergent towards the bottom, **characterised in that** the inner wall of the pipe segment (3) features at least one conical surface (8) convergent towards the top.

2. The unit according to Claim 1, **characterised in that** the openings (6) in the stretching rod (4) are arranged along its entire length.

3. The unit according to Claim 1, **characterised in that** the section across the bottom part of the pipe element (3) matches the cross section of the opening of the blown-moulded preform.

## Patentansprüche

1. Eine Einheit zum Blasformen von Flaschen, die zur Heissfüllung von PET-Vorformlingen bestimmt sind, bestehend aus einem hohlen, im oberen Teil offenen und mit seitlichen Öffnungen versehenen Zugstab und aus einem Rohr, durch das der oben genannte Zugstab so geführt wird, dass ein Druckluftkanal zwischen dem Zugstab und der Innenwand des Rohrs entsteht, wobei die Innenwand des Rohrs (3) mindestens eine nach unten zusammenlaufende konische Fläche (7) umfasst, **dadurch gekennzeichnet, dass** die Innenwand des Rohrs (3) mindestens eine nach oben zusammenlaufende konische Fläche (8) umfasst.

2. Die Einheit nach Anspruch 1, **dadurch gekennzeichnet, dass** die Öffnungen (6) im Zugstab (4) über dessen gesamte Länge verteilt sind.

3. Die Einheit nach Anspruch 1, **dadurch gekennzeichnet, dass** der Querschnitt des Rohrs (3) in seinem unteren Teil an den Querschnitt der Öffnung des zu blasenden Vorformlings angepasst ist.

## Revendications

1. Unité de moulage par soufflage de bouteilles destinée au remplissage à chaud à partir de préformes en PET, comprenant une barre d'étirement creux à l'intérieur, ouverte dans sa partie supérieure, munie d'ouvertures sur la surface latérale, et une portion tubulaire à travers laquelle passe ladite barre d'étirement de telle sorte qu'un canal d'air comprimé soit formé entre la tige d'étirement et la paroi interne de la portion tubulaire, la paroi interne de la portion tubulaire (3) comprend au moins une surface conique effilée vers le bas (7), **caractérisée en ce que** la paroi interne de la portion tubulaire (3) comprend au moins une surface effilée vers le haut (8).

2. Unité selon la revendication 1, **caractérisée en ce que** les trous (6) de la tige d'étirement (4) sont répartis sur toute sa longueur.

3. Unité selon la revendication 1, **caractérisée en ce que** la section transversale de l'élément tubulaire (3) dans sa partie inférieure correspond à la section transversale de l'ouverture de la préforme soufflée.
